# FASCICULE DE BREVET EUROPEEN

(11) **EP 4 304 743 B1**
(45) Date de publication et mention de la délivrance du brevet: **07.10.2026**
(21) Numéro de dépôt: 22713437.6
(22) Date de dépôt: 04.03.2022
(51) Int. Cl.: A62C 35/68, F16L 41/12

(54) **EXTINCTEUR AUTOMATIQUE A EAU ET INSTALLATION DE PROTECTION INCENDIE ASSOCIEE**
AUTOMATISCHER WASSERLÖSCHER UND ENTSPRECHENDE BRANDSCHUTZANLAGE
AUTOMATIC WATER EXTINGUISHER AND ASSOCIATED FIRE PROTECTION INSTALLATION

(30) Priorité: 11.03.2021 FR 2102425; 12.05.2021 FR 2105007
(43) Date de publication de la demande: 17.01.2024
(73) Titulaire: GROUPE SAVE, 33700 Merignac (FR)
(72) Inventeur: KIBLER, Philippe, 69360 Ternay (FR)
(74) Mandataire: Ipsilon
(86) Numéro de dépôt international: PCT/FR2022/050392
(87) Numéro de publication internationale: WO 2022/189737

(56) Documents cités:
- WO-A1-2018/014066
- BR-U2- 202019 015 241
- CN-U- 209 302 086
- DE-A1- 3 812 189
- DE-U1- 20 106 522
- DE-U1- 9 106 943
- FR-A1- 2 402 825
- FR-A1- 2 535 823
- KR-A- 20070 106 101
- US-A- 2 884 265
- US-A- 3 663 042
- US-A- 4 019 581
- US-A- 5 169 177
- US-B1- 8 439 060

## Description

### DOMAINE TECHNIQUE

La présente invention concerne le domaine des installations de protection incendie.

L'invention porte en particulier sur un extincteur automatique à eau incluant au moins un collier de serrage dont le diamètre s'adapte à plusieurs diamètres de canalisations.

L'invention permet notamment d'adapter *in situ* l'extincteur à plusieurs types de canalisations préexistantes.

### ART ANTERIEUR

Les incendies sont l'une des premières causes d'accidents industriels. La prévention des incendies est donc un enjeu considérable pour les entreprises et les lieux accueillant du public. En effet, tout sinistre lié au feu peut engendrer des dégâts matériels et humains considérables. Les entreprises sont donc tenues de mettre en œuvre de mesures visant à prévenir le risque d'incendie, tout manquement pouvant entraîner des poursuites judiciaires et des pénalités.

De manière classique, les installations de protection incendie sont des équipements configurés pour détecter, signaler et sécuriser une zone donnée. Pour ce faire, une installation de protection incendie comporte généralement des organes de détection de la présence d'un incendie, des organes d'inhibition configurés pour arrêter l'incendie, des organes d'alerte configurés pour prévenir de la présence de l'incendie et un poste de contrôle recevant les informations des organes de détection et déclenchant les organes d'inhibition et d'alerte en cas d'incendie.

Parmi les différents types d'installations, les installations de protection incendie utilisant de l'eau sous pression comportent classiquement un réseau de canalisations déployé au sein de la zone à protéger. Les canalisations comportent des extincteurs automatiques à eau, également connus sous le nom de « sprinklers », qui assurent le plus souvent à la fois la fonction d'inhibition et la fonction de détection. Pour ce faire, les extincteurs automatiques à eau comportent un socle percé d'une ouverture, monté sur la canalisation. Cette ouverture est maintenue fermée par une ampoule ou un fusible sensible à la température. En cas d'incendie, la montée en température brise l'ampoule ou fait fondre le fusible, ce qui libère le passage à l'eau sous pression, qui jaillit par l'ouverture pour arroser la zone enflammée. Dans certains modes de réalisation, le flux d'eau vient frapper un déflecteur, positionné directement en regard de l'ouverture de l'extincteur automatique à eau. Ce déflecteur permet d'élargir et d'orienter le flux d'eau en direction de la zone enflammée.

Il existe également des variantes de cette installation, dans lesquelles les extincteurs n'assurent pas la fonction de détection, mais seulement la fonction d'aspersion. Dans ce cas, les canalisations ne contiennent pas de l'eau sous pression en continu, mais l'eau est acheminée jusqu'aux extincteurs uniquement lorsqu'un incendie a été détecté par ailleurs. Dans ces modes de réalisation, les sprinklers ne comportent pas d'ampoule ou de fusible permettant de bloquer le passage de l'eau.

Pour fixer les extincteurs automatiques à eau sur les canalisations, il existe un premier système consistant à souder un manchon autour d'une ouverture ménagée dans la canalisation. L'extincteur automatique à eau est ensuite vissé sur le manchon. Cependant, il est nécessaire de peindre ou de galvaniser le manchon pour lui donner la même couleur que le reste de la canalisation, ce qui ne peut s'effectuer qu'après la soudure, et renchérit le processus de fabrication de l'installation.

Pour pallier ces inconvénients, des systèmes dans lesquels la fixation du manchon sur la canalisation n'est plus réalisée par soudure mais via un collier de prise en charge ont été mis au point.

Selon un premier exemple de réalisation, l'extincteur automatique à eau est indépendant du collier de prise en charge. Par exemple, le document EP 0598151 décrit un collier de prise en charge comportant un connecteur permettant de visser un extincteur automatique à eau sur le collier. A cet effet, le collier de prise en charge comporte deux parties. La première partie, supportant le connecteur, est de forme incurvée, pour s'adapter à la forme de la portion supérieure d'une conduite. La seconde partie est une pièce présentant un effet ressort et permettant de clipper le collier de prise en charge sur la canalisation. En variante, la seconde partie peut également être une pièce rigide de forme incurvée.

Selon un second exemple de réalisation, l'extincteur automatique à eau peut être solidaire du collier de prise en charge. Par exemple, le document EP 3756733 décrit collier de prise en charge comportant une partie supérieure incluant l'extincteur automatique à eau et des moyens de connexion avec la/les partie(s) inférieure(s). La partie supérieure est de forme incurvée, afin de s'adapter à la forme de la portion supérieure d'une conduite. En variante, la partie supérieure peut également être plane, tel qu'illustré dans les documents DE9106943 et GB8422476.

La partie inférieure est une pièce rigide de forme incurvée, configurée pour s'adapter à la forme de la portion inférieure et/ou latérale de la conduite.

Selon un troisième exemple de réalisation, le document DE 9106943 propose l'utilisation d'un extincteur automatique à eau disposant d'une pièce rigide incurvée équipée de filetages à ses extrémités et entourant partiellement la canalisation. La pièce rigide est alors maintenue par des moyens de réglage de type écrou. Ce dispositif ne permet cependant pas d'adapter le collier de serrage aux dimensions des canalisations.

Dans tous les cas, la forme incurvée de la première partie et/ou de la seconde partie est telle qu'il est impossible de l'adapter pour un autre diamètre de canalisation.

En effet, il n'existe pas de normes définissant une taille standardisée de canalisation d'installation d'incendie sur lesquelles sont installées les sprinklers. Les dimensions varient en fonction des besoins et des constructeurs. A titre d'exemple, les canalisations trouvées classiquement sur le marché ont des dimensions qui varient dans une fourchette de diamètres normalisés comprise entre 25 et 125 mm, également désignée selon l'acronyme « DN 25 » ou « DN 125 ».

Ainsi, les systèmes proposés par les documents précédents nécessitent de connaître au préalable les dimensions des canalisations pour pouvoir correctement choisir la taille des colliers de prise en charge. Ce système présente donc un défaut d'adaptabilité qui peut occasionner des surcouts et des retards d'installation dans le cas où les dimensions des colliers ne sont pas adaptées aux dimensions des canalisations.

Le document BR 2020190152 propose un collier de prise en charge destiné à être positionné sur une canalisation dans lequel le socle incurvé est équipé de fentes latérales permettant l'ancrage et le verrouillage d'une bande autobloquante de type Colson en plastique. La bande autobloquante est équipée d'un ergot permettant le blocage de la bande lorsqu'elle est engagée dans une des fentes latérales du socle, et l'autre extrémité de la bande est comporte des crans permettant de régler le serrage de la bande dans une seconde fente du socle.

Ce type d'architecture n'est cependant pas, du fait des contraintes appliquées à la bande et aux moyens de réglage, adapté pour résister à des pressions de l'ordre d'une dizaine de bars et passer les tests d'étanchéité imposés par les normes incendies existantes.

Le problème technique que se propose de résoudre l'invention est donc de mettre au point un extincteur automatique à eau pouvant s'adapter à plusieurs diamètres de canalisations existants.

### DESCRIPTION DE L'INVENTION

Pour résoudre ce problème, l'invention propose de mettre au point un extincteur automatique à eau comportant au moins un collier de serrage réalisé dans un matériau souple permettant de l'adapter à la forme et à la taille de la canalisation. L'invention est donc le résultat d'une découverte selon laquelle ces colliers de serrage souples peuvent se substituer aux colliers rigides de l'art antérieur sans perte de qualité des installations.

En effet, les installations de protection incendie sont soumises à des normes très contraignantes qui requièrent que les installations soient conformes au moment de leur mise en service, mais également qu'elles conservent cette conformité tout au long de leur vie, afin d'être efficace au moment d'un incendie. Ces normes régulent notamment les pressions auxquelles les composants de l'installation doivent résister.

Or, un homme du métier serait naturellement amené à penser que les colliers de serrage souples de l'invention présentent un risque trop important d'usure et de déformation, notamment lorsqu'ils sont soumis aux pressions de l'ordre de 10 bars nécessaires dans les installations incendie, par exemple comprise entre 5 et 20 bars et préférentiellement entre 8 et 12 bars. Un homme du métier aurait ainsi évité d'utiliser ces colliers de serrage pour le domaine des sprinklers afin de limiter les risques de sécurité.

Ainsi, l'invention traite d'un extincteur automatique à eau destiné à être monté sur une ouverture d'une canalisation, ladite canalisation faisant partie d'une installation configuré pour contenir de l'eau sous une pression de 5 à 20 bars, ledit extincteur comportant :
- un socle monobloc présentant un trou traversant, et
- un joint destiné à assurer l'étanchéité de la connexion entre l'ouverture de ladite canalisation et le trou traversant dudit socle.

Un tel extincteur est caractérisé en ce que :
- le socle comporte en outre au moins deux points d'ancrage,
- un élément d'obturation du trou traversant sensible à la température et configuré pour libérer ce trou traversant, et
- l'extincteur comporte au moins un collier de serrage comprenant :
   - un feuillard destiné à entourer partiellement la canalisation, ledit feuillard coopérant avec le socle au niveau desdits points d'ancrage, et
   - des moyens de réglage indépendants du socle, permettant d'adapter la longueur de l'au moins un collier de serrage de sorte que l'extincteur est apte à être monté sur des canalisations de diamètres différents. Ces moyens de réglage comprennent une boucle solidaire d'une extrémité du feuillard, cette boucle comportent un logement dans lequel une autre extrémité de ce feuillard est insérée. Cette autre extrémité du feuillard est déplacée par un mouvement qui comprime le feuillard autour de la canalisation de sorte à obtenir une tension recherchée de compression du feuillard. Des moyens de fixation de ce feuillard dans le logement, sont insérés dans la boucle au moyen d'une action selon une direction qui est perpendiculaire à la longueur du logement et au sens de déplacement du feuillard, de sorte à brider les déplacements du feuillard et à maintenir la tension recherchée de compression du feuillard autour de la canalisation. L'extincteur est ainsi apte à supporter des pressions comprises entre 5 et 20 bars et, de préférence entre 8 et 12 bars .

Autrement formulé, les moyens de réglage permettent d'adapter la longueur du collier de serrage par rapport au diamètre de la canalisation. Par exemple, le collier peut présenter une longueur suffisante pour s'adapter à des diamètres compris entre 25 et 50 mm.

Pour obtenir cette capacité d'adaptation, les moyens de réglage peuvent se présenter sous la forme d'une boucle, coopérant avec des encoches ménagées dans le feuillard.

Les moyens de réglages sont en outre indépendants du socle afin d'être positionnés dans une zone distante du socle et pouvoir ainsi mieux résister aux contraintes de pression s'exerçant sur l'ouverture de la canalisation. En effet, plus les moyens de réglage sont distants du socle, mieux le collier de serrage résiste à l'allongement, la déformation et la rupture.

De préférence, les moyens de réglage sont installés de manière diamétralement opposée à l'ouverture de la canalisation, pour compenser au mieux la force de pression s'exerçant sur le socle, depuis l'ouverture de la canalisation. La tension s'exerçant autour de la canalisation, elle est ainsi mieux répartie.

Selon l'invention, le socle est monobloc, c'est-à-dire que le socle est une pièce formée d'un seul tenant, par opposition à une pièce issue de l'assemblage de plusieurs éléments constitutifs, tel que décrit par exemple dans le document WO2018/014066. Compte tenu des fortes pressions exercées, l'utilisation d'un socle monobloc permet de garantir une résistance pérenne pour une durée garantie d'exploitation, pour exemple pour 5 ou 10 ans d'exploitation.

L'association du joint, des moyens de réglage et du feuillard coopérant avec le socle, permet de garantir l'étanchéité de la connexion entre la canalisation et l'extincteur automatique ainsi que l'adaptabilité du collier de serrage à différents diamètres de canalisations. En effet, le feuillard permet de presser le socle contre la canalisation alors que le joint, intercalé entre le socle et la canalisation est comprimé. Sous la traction du feuillard sur le socle, le joint se déforme pour garantir l'étanchéité du socle autour du trou traversant de la canalisation et pour épouser la courbure de la canalisation. Ainsi, le joint sous la pression du socle permet d'absorber les différences de courbures entre la canalisation et le socle. En outre, les moyens de réglage permettent de sécuriser le feuillard dans une position dans laquelle le joint est comprimé de sorte que la capacité de compression du joint vient également combler le manque de progressivité des positions de fixation des moyens de serrage.

Il s'ensuit que la traction exercée par le feuilllard sur le socle, la modularité des moyens de réglage et la capacité de déformation du joint permettent d'adapter le dispositif de prise en charge à des canalisations de diamètres variables.

Par ailleurs, les moyens de réglage et le feuillard sont durables dans le temps, c'est-à-dire qu'ils ne se déforment pas et ne dérèglent pas au cours du temps. La connexion reste donc durablement étanche.

En outre, l'association des moyens de réglage et du joint permet également d'adapter la longueur du collier de serrage à des variations très faibles du diamètre de la canalisation, dues aux tolérances de fabrication. En effet, parmi les canalisations d'un diamètre donné, par exemple pour un diamètre de 25 mm, la tolérance du constructeur peut prévoir une marge de +/- 1mm au sein de laquelle le diamètre de la canalisation peut varier. De préférence, les encoches des moyens de réglage présentent un pas suffisamment réduit pour permettre l'adaptation à la tolérance du constructeur.

L'extincteur automatique à eau peut être positionné avec n'importe quelle orientation par rapport à la canalisation, si tant est qu'il est fixé au niveau d'une ouverture de la canalisation. A titre d'exemple, l'extincteur automatique à eau peut être positionné au-dessus de la canalisation, au-dessous ou sur le côté.

La longueur des colliers de serrage correspond à la portion utile des colliers, qui est destinée à être positionnée contre les parois de la canalisation. En effet, un collier de serrage peut présenter une longueur totale fixe, mais lors du réglage, seule une portion du collier peut être utilisée effectivement pour maintenir l'extincteur automatique à eau contre la canalisation. La portion non utile peut éventuellement être coupée pour ne pas gêner l'extinction générée par l'extincteur automatique.

Avantageusement, un tel extincteur automatique à eau permet de rendre l'installation plus compacte. En effet, l'invention permet de se passer de la présence d'un manchon de réception de l'extincteur automatique. Cette configuration permet donc de réduire la hauteur de l'extincteur automatique à eau. Celui-ci peut donc être plus facilement inséré dans des espaces réduits, tels que les casiers de stockage, ou les espace sous plafond restreint par exemple.

En outre, des colliers de serrage pouvant s'adapter à plusieurs diamètres de canalisations permettent de limiter le nombre de références de tailles de colliers différents, ce qui limite les couts de production. Par ailleurs, le réglage des colliers de serrage peut se faire de manière sensiblement continue, contrairement aux colliers de prise en charge de l'art antérieur qui ont une forme adaptée pour un seul diamètre de canalisation.

De plus, les colliers de serrage de l'invention permettent d'adapter l'extincteur automatique à eau *in situ,* sans avoir à prévoir au préalable le nombre et la taille des colliers. Ceci permet un gain de temps et une diminution du prix de revient non négligeables.

Dans un mode de réalisation, l'extincteur comporte un unique collier de serrage et uniquement deux points d'ancrage disposés de part et d'autre du socle.

En effet, l'homme du métier pensant que les colliers de serrage souples de l'invention présentent un risque trop important d'usure et de déformation, serait amené à multiplier le nombre de colliers de serrage pour renforcer la structure du collier de serrage. Or, l'invention permet, contre toutes attentes, de n'utiliser qu'un unique collier de serrage sans pour autant augmenter les risques de fuites par exemple.

Au sens de l'invention, les « points d'ancrages » correspondent aux éléments de réception du socle permettant de fixer le collier de serrage lorsque le collier de serrage est enserré autour de la canalisation. Ces points d'ancrages peuvent correspondre à des ouvertures ou des excroissances, tels que des ergots.

Selon un mode de réalisation, les points d'ancrage sont des ouvertures traversantes orientées selon une direction parallèle à la direction principale de la canalisation, le feuillard étant monté sur le socle en insérant au moins une extrémité du feuillard dans les ouvertures traversantes et en formant une boucle autour des bordures dudit socle.

Selon l'invention, la direction principale de la canalisation correspond à la direction parallèle à la longueur de la canalisation.

Le montage du collier de serrage sur le socle est ainsi facilité car la méthode de réglage est facilement reproductible et nécessite peu d'outils. A titre d'exemple, il suffit de traverser les deux ouvertures de bas en haut, de sorte que le feuillard entoure la canalisation. Les extrémités du feuillard sont ensuite tirées depuis le dessus du socle et rabattues par-dessus les extrémités du socle pour serrer le collier de serrage autour de la canalisation. Les extrémités du feuillardsont ensuite ramenées ensemble et fixées par les moyens de réglage. L'installation des extincteurs automatiques à eau sur les canalisations est ainsi globalement rendue plus rapide.

En pratique, les ouvertures traversantes peuvent correspondre à des fentes ménagées dans le socle. En variante, les ouvertures traversantes peuvent correspondre à l'espace formé entre le socle et un axe rapporté sur le socle.

De préférence, les ouvertures sont ménagées symétriquement par rapport à un axe central du socle, permettant ainsi de réduire les risques de mauvais positionnement de l'extincteur automatique à eau contre l'ouverture de la canalisation.

Selon une autre mode de réalisation, les deux extrémités du feuillard sont configurées pour coopérer avec les points d'ancrage disposés de part et d'autre du socle, de sorte que le du feuillard enserre partiellement la canalisation après action sur les moyens de réglage.

En pratique, chaque point d'ancrage comporte un logement délimité par deux ergots, séparés d'une fente dimensionnée pour permettre le passage du feuillard le logement étant destiné à recevoir un axe fixé à une extrémité du feuillard, les ergots étant destinés à permettre l'insertion des axes dans les logements avant action sur les moyens de réglage et à bloquer l'extraction desdits axes après action sur les moyens de réglage.

Le montage du collier de serrage sur le socle est ainsi facilité car la méthode de réglage est facilement reproductible et nécessite peu d'outils. Il suffit que le feuillard entoure la canalisation et que ses extrémités, munies d'un axe, soient bloquées dans les logements du socle. Le collier de serrage est ensuite adapté au diamètre de la canalisation via les moyens de réglage. L'installation des extincteurs automatiques à eau sur les canalisations est ainsi globalement rendue plus rapide.

En variante, chaque point d'ancrage comprend un ergot destiné à coopérer avec un trou ménagé aux extrémités du feuillard.

Le montage du collier de serrage sur le socle s'effectue en montant le feuillard autour de la canalisation de sorte que ses extrémités, munies d'un trou, soient bloquées sur les ergots du socle. Le collier de serrage est ensuite adapté au diamètre de la canalisation via les moyens de réglage.

Le feuillard est de forme similaire à un ruban. En variante, le feuillard peut être remplacé par un câble, plus fin mais néanmoins tout aussi résistant. En effet, l'invention permet d'utiliser des éléments longilignes (feuillard, câble) dont la largeur est réduite sans compromettre la sécurité des installations.

En pratique, le feuillard est formé dans un matériau métallique, car de manière surprenante, l'invention permet d'utiliser des matériaux différents pour la réalisation du feuillard sans compromettre la sécurité des installations.

Avantageusement, les moyens de réglage de la longueur de l'au moins un collier de serrage comportent des repères permettant de comprimer le joint à un taux prédéterminé.

Ce mode de réalisation permet de faciliter l'installation du collier de serrage et d'annihiler les risques d'erreurs. Le technicien peut en effet se fier à des repères visuels lors de l'installation, lui indiquant jusqu'où serrer le collier de serrage pour que le joint soit comprimé de manière optimale pour ne pas créer de fuites en fonction du diamètre et de la pression de service. En variante, ces repères de réglage peuvent également être remplacés par ou associés à un appareil de mesure de la tension de réglage du collier de serrage.

En outre, dans un mode de réalisation préférentiel, les moyens de réglage sont solidaires d'une extrémité du feuillard.

En effet, ce mode de réalisation permet d'effectuer le serrage de l'extincteur automatique sur la canalisation en effectuant un simple mouvement de tirage de l'extrémité libre du feuillard.

Un collier de serrage présentant les caractéristiques précédentes permet avantageusement de simplifier et de réduire le temps nécessaire au montage de l'extincteur automatique à eau sur la canalisation.

Cependant, le système de blocage du feuillard pourrait être différent sans que cela nuise au bon fonctionnement de l'invention.

Dans certains modes de réalisation de l'invention, l'extincteur automatique à eau comporte en outre un élément d'obturation dudit trou traversant sensible à la température et configuré pour libérer le trou traversant lorsque la température dépasse une valeur seuil de sorte à extraire un flux d'eau de la canalisation.

Avantageusement, l'extincteur automatique à eau comporte également un déflecteur fixé au-dessus dudit socle et destiné à pulvériser le flux d'eau issu de la canalisation.

Ces éléments forment la tête de l'extincteur automatique à eau. L'invention couvre les modes de réalisation dans lesquels les étriers et le socle forment un bloc monolithique, sur lequel seront rapportés un déflecteur et un élément d'obturation. De manière alternative, l'invention couvre également les modes de réalisations dans lesquels la tête, formée par les étriers, le déflecteur et l'élément d'obturation, est indépendante du socle.

En d'autres termes, selon un premier mode de réalisation le socle et la tête, comportant le déflecteur, les étriers et/ou l'élément d'obturation forment un bloc monolithique.

Selon un second mode de réalisation, le socle et la tête, comportant le déflecteur, les étriers et/ou l'élément d'obturation sont indépendants, la tête étant rapportée sur le socle par vissage, par emboitement dans un raccord rainuré ou par tout autre moyen de coopération.

Selon un autre aspect, l'invention concerne une installation de protection incendie incluant :
- au moins une canalisation présentant au moins une ouverture, et
- au moins un extincteur automatique à eau tel que décrit précédemment.

De préférence, la canalisation est une canalisation peinte ou pré-peinte sur ses faces interne et externe, c'est-à-dire que la canalisation comporte une peinture recouvrant ses faces interne et externe. La peinture permet de protéger la canalisation des dégradations, notamment celles causées par la rouille.

La peinture appliquée doit permettre de faire des perçages et des découpes sans s'écailler, réduisant ainsi considérablement les temps de fabrication en atelier. En effet, la phase de mise en peinture après fabrication usuellement réalisée dans les procédés connus est supprimée.

De préférence, la peinture de la canalisation comprend un liant polymère époxyde, particulièrement résistant lors du perçage et des découpes.

### BREVE DESCRIPTION DES FIGURES

La manière de réaliser l'invention, ainsi que les avantages qui en découlent, ressortiront bien de la description des modes de réalisation qui suivent, à l'appui des figures annexées dans lesquelles :
[Fig 1] La figure 1 est une vue en perspective d'une canalisation sur laquelle sont fixés quatre extincteurs automatiques à eau selon quatre modes de réalisation différents,
[Fig 2] la figure 2 est une vue en perspective d'une canalisation sur laquelle sont fixés quatre extincteurs automatiques à eau selon quatre autres modes de réalisation différents,
[Fig 3] la figure 3 est une vue de face d'un extincteur automatique à eau monté sur une canalisation selon un premier mode de réalisation de la figure 1,
[Fig 4] La figure 4 est une vue de côté d'un extincteur automatique à eau monté sur une canalisation selon le premier mode de réalisation de la figure 1,
[Fig 5] La figure 5 est une vue de dessus d'un extincteur automatique à eau monté sur une canalisation selon le premier mode de réalisation de la figure 1,
[Fig 6] La figure 6 est une vue de face d'un extincteur automatique à eau monté sur une canalisation selon un deuxième mode de réalisation de la figure 1,
[Fig 7] La figure 7 est une vue de côté d'un extincteur automatique à eau monté sur une canalisation selon le deuxième mode de réalisation de la figure 1,
[Fig 8] La figure 8 est une vue de dessus d'un extincteur automatique à eau monté sur une canalisation selon le deuxième mode de réalisation de la figure 1,
[Fig 9] La figure 9 est une vue de face d'un extincteur automatique à eau monté sur une canalisation selon un troisième mode de réalisation de la figure 1,
[Fig 10] La figure 10 est une vue de côté d'un extincteur automatique à eau monté sur une canalisation selon le troisième mode de réalisation de la figure 1,
[Fig 11] La figure 11 est une vue de dessus d'un extincteur automatique à eau monté sur une canalisation selon le troisième mode de réalisation de la figure 1,
[Fig 12] La figure 12 est une vue de face d'un extincteur automatique à eau monté sur une canalisation selon un quatrième mode de réalisation de la figure 1,
[Fig 13] La figure 13 est une vue de côté d'un extincteur automatique à eau monté sur une canalisation selon le quatrième mode de réalisation de la figure 1,
[Fig 14] La figure 14 est une vue de dessus d'un extincteur automatique à eau monté sur une canalisation selon le quatrième mode de réalisation de la figure 1,
[Fig 15] La figure 15 est une vue de face d'un extincteur automatique à eau monté sur une canalisation selon un cinquième mode de réalisation de la figure 2,
[Fig 16] La figure 16 est une vue de côté d'un extincteur automatique à eau monté sur une canalisation selon le cinquième mode de réalisation de la figure 2,
[Fig 17] La figure 17 est une vue de dessus d'un extincteur automatique à eau monté sur une canalisation selon le cinquième mode de réalisation de la figure 2,
[Fig 18] La figure 18 est une vue de face d'un extincteur automatique à eau monté sur une canalisation selon un sixième mode de réalisation de la figure 2,
[Fig 19] La figure 19 est une vue de côté d'un extincteur automatique à eau monté sur une canalisation selon le sixième mode de réalisation de la figure 2,
[Fig 20] La figure 20 est une vue de dessus d'un extincteur automatique à eau monté sur une canalisation selon le sixième mode de réalisation de la figure 2,
[Fig 21] La figure 21 est une vue de face d'un extincteur automatique à eau monté sur une canalisation selon un septième mode de réalisation de la figure 2,
[Fig 22] La figure 22 est une vue de côté d'un extincteur automatique à eau monté sur une canalisation selon le septième mode de réalisation de la figure 2,
[Fig 23] La figure 23 est une vue de dessus d'un extincteur automatique à eau monté sur une canalisation selon le septième mode de réalisation de la figure 2,
[Fig 24] La figure 24 est une vue de face d'un extincteur automatique à eau monté sur une canalisation selon un huitième mode de réalisation de la figure 2,
[Fig 25] La figure 25 est une vue de côté d'un extincteur automatique à eau monté sur une canalisation selon le huitième mode de réalisation de la figure 2,
[Fig 26] La figure 26 est une vue de dessus d'un extincteur automatique à eau monté sur une canalisation selon le huitième mode de réalisation de la figure 2,
[Fig 27] La figure 27 est une vue en perspective du socle d'un extincteur automatique à eau monté sur une canalisation et du collier de serrage selon un neuvième mode de réalisation de l'invention,
[Fig 28] La figure 28 est une vue en perspective des moyens de réglage du collier de serrage de la figure 27,
[Fig 29] La figure 29 est une vue en coupe partielle des moyens de réglage du collier de serrage de la figure 27,
[Fig 30a] La figure 30a est une vue en coupe d'une première étape d'installation d'un extincteur automatique à eau selon un dixième mode de réalisation de l'invention,
[Fig 30b] La figure 30b est une vue en coupe d'une deuxième étape d'installation d'un extincteur automatique à eau selon un dixième mode de réalisation de l'invention,
[Fig 30c] La figure 30c est une vue en coupe d'une troisième étape d'installation d'un extincteur automatique à eau selon un dixième mode de réalisation de l'invention,
[Fig 30d] La figure 30d est une vue en coupe d'une quatrième étape d'installation d'un extincteur automatique à eau selon un dixième mode de réalisation de l'invention,
[Fig 31] La figure 31 est une vue en perspective plongée du socle d'un extincteur automatique à eau selon un onzième mode de réalisation de l'invention,
[Fig 32] La figure 32 est une vue de face du socle de l'extincteur automatique à eau de la figure 31, et
[Fig 33] La figure 33 est une vue en perspective contre plongée du socle de l'extincteur automatique à eau de la figure 31.

### DESCRIPTION DES MODES DE REALISATION

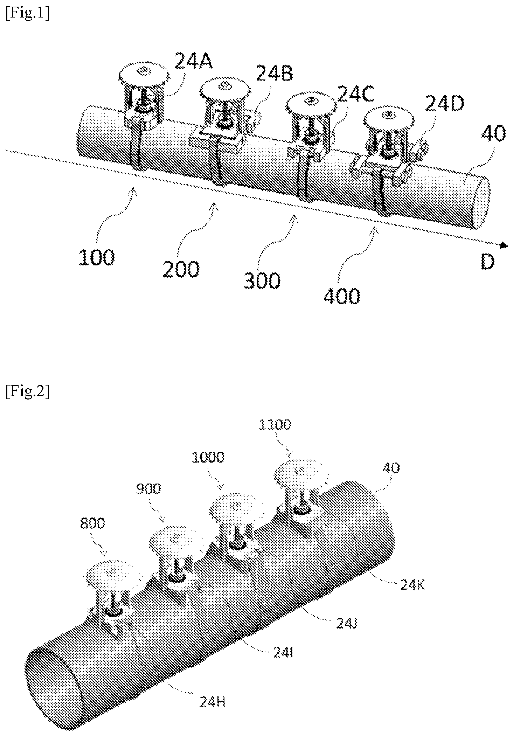

Tel qu'illustré sur les figures 1 et 2, des extincteurs automatiques à eau **100, 200, 300, 400, 800, 900, 1000, 1100** sont montés sur une installation de protection incendie comportant au moins une canalisation **40.**

La canalisation **40** est configurée pour supporter des pressions de l'ordre d'une dizaine de bars, par exemple comprise entre 5 et 20 bars et préférentiellement entre 8 et 12 bars. Pour ce faire, la canalisation **40** est de préférence réalisée dans un matériau présentant de bonnes propriétés de résistance à la déformation, typiquement en acier, en acier inoxydable, en acier galvanisé, en cuivre ou en polychlorure de vinyle surchloré.

En outre, le diamètre de la canalisation **40** peut varier, typiquement entre 25 et 125 mm, également appelé selon l'acronyme « DN 25 » ou « DN 125 », en fonction des besoins liés à la zone à protéger, des dimensions de l'installation et du positionnement de l'extincteur automatique par rapport à la source d'eau.

A titre d'exemple, l'installation de protection incendie peut-être formée d'un squelette central de canalisations **40** de plus gros diamètre et de ramifications formées par des canalisations de plus petit diamètre.

Afin d'intégrer les extincteurs automatiques à eau **100, 200, 300, 400, 800, 900, 1000, 1100** de l'invention, une ou plusieurs ouvertures **42** sont ménagées dans les canalisations **40.** Les ouvertures **42** sont par exemple circulaires en vue de dessus, d'un diamètre compris entre 10 et 25 mm, également appelé selon l'acronyme « DN 10 » ou « DN 25 ». Le diamètre de l'ouverture **42** est dimensionné en fonction de la tête sprinkler qui sera choisie pour l'extinction de la zone à protéger. En outre, il a été également constaté que l'invention peut également mise en œuvre pour des canalisations de DN 32 à DN 40.

La distance séparant deux ouvertures **42** est réglementée généralement entre 2 et 4.6 m. De même, une ouverture **42** doit être distante d'au moins 1 m d'une paroi de la zone à protéger. Il a été récemment constaté que la distance séparant deux ouvertures **42** peut être de 0,9 m.

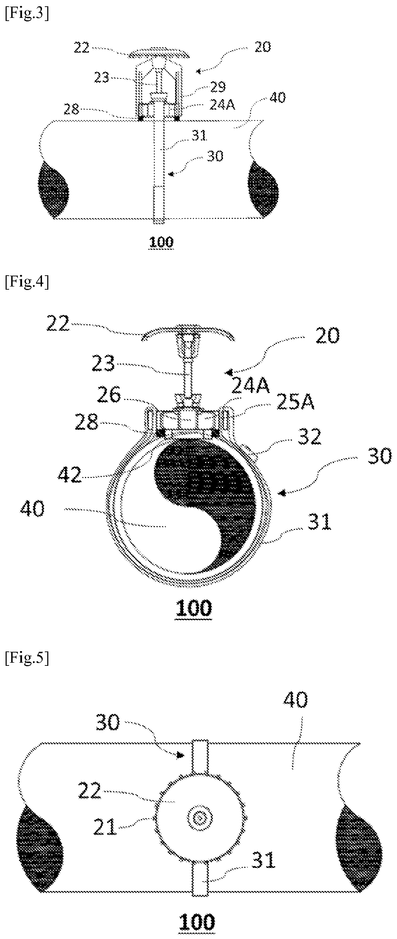

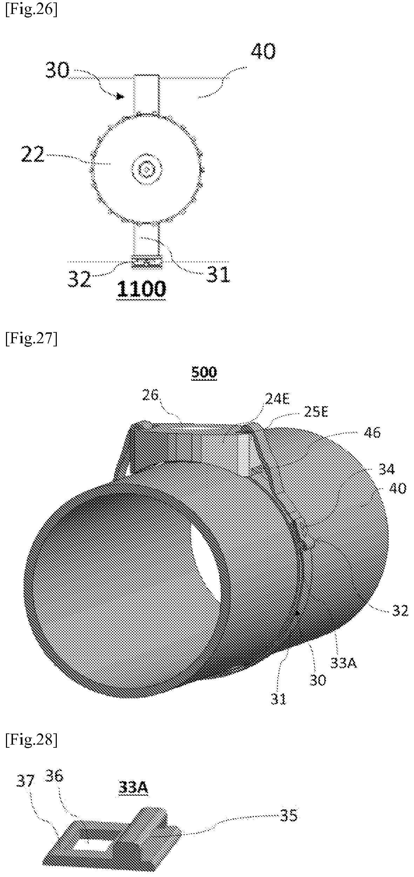

Les figures 1 et 2 illustrent plusieurs modes de réalisation d'extincteurs automatiques à eau **100, 200, 300, 400, 800, 900, 1000, 1100** selon l'invention. Tous les modes de réalisation présentent cependant des éléments communs. A titre d'exemple, en référence aux figures 3 à 5, les extincteurs automatiques à eau **100, 200, 300, 400, 800, 900, 1000, 1100** sont formés d'un socle **24A-24D, 2AH-24K** monobloc, présentant une forme sensiblement parallélépipédique plane d'une épaisseur comprise entre 0,5 et 1,5 cm. En variante, la face inférieure du socle **24E, 24G** peut présenter une légère courbure, tel qu'illustré sur la figure 27 et 31-33. La courbure de la face inférieure est choisie pour s'adapter à la courbure de la canalisation **40** de plus grand diamètre sur laquelle peut s'adapter l'extincteur automatique à eau **500, 700.** Plus récemment, des socles **24E, 24G** présentant une épaisseur de 3 mm ont été observés.

Le socle **24A-24D, 2AH-24K** peut être directement obtenu par un procédé de moulage, un procédé par soustraction de matière tel que l'usinage ou la découpe laser ou encore par un procédé additif tel que l'impression 3D.

Le socle **24A-24K** présente en outre par exemple une ouverture traversante **26** d'un diamètre compris entre 2 et 10 mm. Le diamètre peut être plus grand sans changer l'invention, typiquement compris entre 10 et 500 mm.

Avantageusement un joint **28** est positionné en regard de la face inférieure du socle **24A-24K,** typiquement entre le socle **24A-24K** et la canalisation **40,** de sorte à entourer les ouvertures **26** et **42** respectivement du socle **24A-24** K et de la canalisation **40.** A titre d'exemple, le joint **28** est un joint torique en caoutchouc d'une épaisseur comprise entre 0,2 et 0,7 cm. En variante, pour les canalisations de plus grand diamètre, le joint peut comporter des lèvres et présenter une épaisseur comprise entre 0,5 et 3 cm.

L'ouverture **26** du socle **24A-24 K** est de préférence obturée par un élément d'obturation **23** thermosensible, typiquement une ampoule en verre ou un fusible configuré pour se dégrader lorsque la température à proximité de l'extincteurs automatiques à eau **100, 200, 300, 400, 500, 600, 700, 800, 900, 1000, 1100** atteint une valeur seuil de déclenchement, typiquement comprise entre 57 et 343°C.

Il existe plusieurs standards de température de de dégradation des ampoules et/ou de fusibles. Ces standards sont notamment reconnaissables à la couleur du liquide contenu dans l'ampoule. A titre d'exemple, la couleur rouge correspond à une température de déclenchement de 68°C. Avantageusement, un déflecteur **22** est positionné en regard de l'ouverture **26** du socle **24A-24D, 24H-24K.** Le déflecteur **22** présente une forme similaire à un parapluie ou à une ombrelle, c'est-à-dire une surface circulaire, de préférence incurvée dont la partie concave est positionnée en regard de l'ouverture **26** de sorte à intercepter un flux d'eau en provenance de l'ouverture **26** et à le rediriger vers la zone enflammée. En variante, le déflecteur **22** peut présenter tout autre forme permettant une dispersion efficace du flux d'eau.

Avantageusement, le pourtour du déflecteur est muni d'ailettes **21.** Le déflecteur **22** est maintenu par des étriers latéraux **29,** avantageusement au nombre de deux. L'ensemble est par exemple réalisé en laiton, en bronze, en aluminium, en acier inoxydable, en titane ou en cuivre. Une vis est par exemple fixée au niveau de la jonction entre les étriers **29** et le déflecteur. La vis permet à la fois de maintenir le déflecteur et d'appuyer sur l'élément d'obturation **23.**

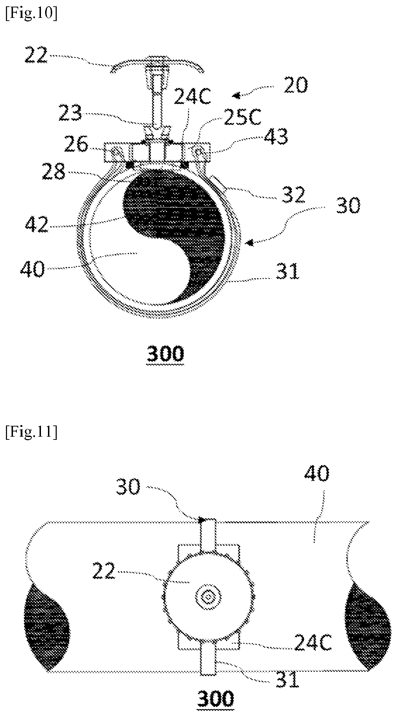

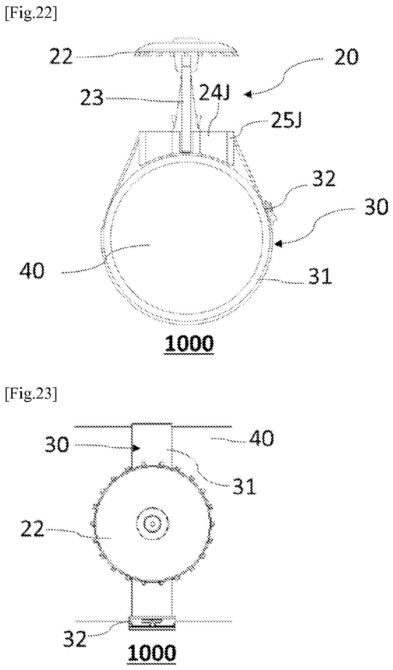

Selon les modes de réalisation illustrés sur les figures 1 à 26, l'ensemble formé par le déflecteur **22,** les étriers **29** et l'élément d'obturation **23,** également appelé « tête » **20,** est solidaire du socle **24A-24D, 24H-24K.**

Dans d'autres modes de réalisation, illustrés par exemple sur la figure 27 et 31 à 33, la tête **20,** non représentée, peut être indépendante du socle **24E, 24G,** c'est-à-dire que la tête **20** peut être rapportée sur le socle **24E, 24G** en alignant l' ouverture traversante de la tête **20** avec l'ouverture traversante **26** du socle **24E, 24G.** Par exemple, la tête **20** peut présenter une portion mâle présentant un filetage ou une rainure et coopérant avec un second filetage ou une rainure ménagée dans les parois de l'ouverture traversante **26** du socle **24E, 24G.** La tête **20** peut ainsi être vissée ou fixée par l'intermédiaire d'un raccord rainuré sur le socle **24E, 24G.**

Le ou les collier(s) de serrage **30** permettent de fixer et maintenir la tête **20** sur la canalisation **40.** Les colliers de serrage **30** comprennent un élément longiligne, comme par exemple une bande d'une largeur comprise entre 0,5 et 2 cm ou encore un câble de diamètre compris entre 0,2 et 1 cm. En variante, l'élément longiligne peut être un élément de serrage de type « serflex », réalisé dans un matériau métallique. Les colliers de serrage **30** comportent également des moyens de réglage **32** de la longueur et du serrage d'un collier de serrage **30.** Le socle **24A-24K** peut être munit d'un ou de plusieurs colliers de serrages **30** en fonction des besoins de l'installation et du diamètre de la canalisation **40.**

Les moyens de réglage **32** sont indépendants du socle **24A-24K.**

Selon un premier exemple, les moyens de réglage **32** peuvent également être indépendants de l'élément longiligne du collier de serrage **30.** Ils peuvent être constitués d'une ou plusieurs pièces rapportées qui peuvent se fixer ou s'emboiter sur l'élément longiligne afin de le maintenir en place.

Tel qu'illustré sur les figures 27 à 29, le collier de serrage **30** peut se présenter sous la forme d'un feuillard métallique **31** et les moyens de réglage peuvent inclure une boucle **33A,** indépendante du feuillard **31,** comportant un logement **35** dans lequel les extrémités du feuillard **31** sont insérées. Des vis autoforeuses **34** permettent de transpercer les différentes épaisseurs de feuillard **31.** Avantageusement, la boucle **33A** présente une ouverture **36** permettant d'accueillir la portion inférieure du corps de la vis **34.**

Ainsi, l'élément longiligne peut être directement adapté au diamètre et à la tolérance d'une canalisation **40** en créant l'ouverture nécessaire pour que le joint **28** soit comprimé avec un taux de compression optimal et que la liaison entre la canalisation et l'extincteur automatique soit rendue la plus étanche possible. Le réglage est réalisé « sur mesure » et les possibilités de réglage sont quasiment continues.

En variante, dans un mode de réalisation non représenté sur les figures, l'élément longiligne peut être un feuillard métallique comportant des ouvertures ménagées régulièrement et de manière rapprochée le long de l'élément longiligne. Afin que l'élément longiligne puisse être directement adapté au diamètre et à la tolérance d'une canalisation, le pas entre les ouvertures est de préférence inférieur ou égal à la tolérance du constructeur. Typiquement, si la canalisation présente un diamètre de 25mm et que la tolérance est de +/- 1mm, le pas entre les ouvertures est inférieur ou égal à la 1mm. Ainsi, le joint peut être comprimé avec un taux de compression optimal, et la liaison entre la canalisation et l'extincteur automatique est redue la plus étanche possible.

Afin de fixer le socle **24E** sur la canalisation **40,** celui-ci est positionnée sur l'ouverture **42** de la canalisation **40,** afin que les étriers de la tête soient alignés avec la longueur de la canalisation **40** pour que l'eau jaillisse dans une direction perpendiculaire à la direction principale **D** de la canalisation **40.** Les deux extrémités du feuillard **31** sont insérées, selon un mouvement de bas en haut, à travers les points d'ancrages, matérialisés par des ouvertures latérales **25E** de sorte que le feuillard **31** entoure la canalisation **40.** Les extrémités du feuillard **31** sont ensuite tirées depuis le dessus du socle **24E** et rabattues par-dessus les extrémités du socle **24E** pour serrer le collier de serrage **30** autour de la canalisation **40.** Les extrémités du feuillard **31** sont ensuite ramenées ensemble, formant ainsi une boucle autour de chaque bord du socle **24E.** Les extrémités du feuillard **31** sont ensuite fixées ensemble par les moyens de réglage **32.**

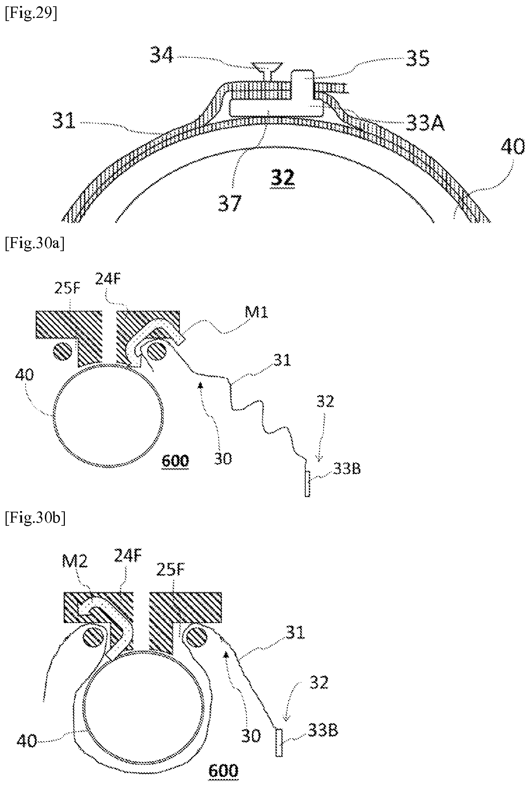

Ainsi, tel qu'illustré sur la figure 29, la boucle **33A** est positionnée sur une première épaisseur de feuillard **31.** Les extrémités du feuillard **31** sont ensuite rabattues et insérées dans le logement **35** de la boucle **33A,** puis serrées de sorte à maintenir efficacement le socle **24E** sur la canalisation **40.** Pour ce faire, les extrémités du feuillard **31** dépassent de chaque côté du logement **35** sur une longueur d'au moins 1cm. Les extrémités du feuillard **31** se superposent ainsi au niveau du corps **37** de la boucle **33A.** La vis **34** est enfin insérée au niveau de cette superposition et transperce les deux épaisseurs formées par les extrémités du feuillard **31.**

En variante, tel qu'illustré sur les figures 30a à 30d, les moyens de réglage **32** peuvent être solidaires d'une extrémité de la bande. Ainsi, le collier de serrage **30** peut se présenter sous la forme d'un feuillard métallique **31** et les moyens de réglage peuvent inclure une boucle **33B** comportant un logement **35,** fixé à l'extrémité du feuillard **31.**

Le logement **35** peut prendre la forme d'un tube de section parallélépipédique, destiné à permettre le passage d'une partie du feuillard métallique **31.** En outre, des moyens de fixation, tels qu'une vis autoforeuse **34,** peuvent être placés sur le logement **35,** perpendiculairement à la longueur du tube et au sens de déplacement du feuillard **31** dans le tube, de sorte à brider les déplacements du feuillard **31** lorsqu'il est comprimé autour de la canalisation **40** et inséré dans le tube.

Dans un mode de réalisation alternatif non représenté, les moyens de fixation incluent une bille contenue dans le tube et destinée à bloquer les déplacements de l'élément longiligne. Pour ce faire, le tube présente une section variable. Typiquement, la section du tube se rétrécit depuis des dimensions supérieures au diamètre de la bille jusqu'à des dimensions sensiblement égales au diamètre de la bille. Ainsi, lors du coulissement de l'élément longiligne dans le tube, la bille est entrainée dans une direction opposée à la direction d'insertion de l'élément longiligne, vers la partie du tube de dimensions réduites, où elle se retrouve bloquée. La bille bloque ainsi également l'élément longiligne.

Dans le mode de réalisation des figures 30a-30d, les espaces **25F** du socle **24F** sont utilisés pour créer des points de fixation du feuillard **31.** Pour ce faire, tel qu'illustré sur la figure 30a, l'extrémité du feuillard **31** non pourvue de la boucle **33B** est insérée selon un premier mouvement **M1** pour entourer un premier point de fixation du socle **24F.** Ce mouvement **M1** est réalisé en insérant le feuillard **31** dans l'espace **25F** depuis la face supérieure du socle **24F** jusqu'à la face inférieure du socle **24F** jusqu'à ce que le feuillard **31** arrive le long de la canalisation **40.**

Le feuillard **31** est alors déplacé autour de la canalisation **40** jusqu'au deuxième point de fixation du socle **24F.** Tel qu'illustré sur la figure 30b, le feuillard **31** est alors introduit dans l'espace **25F** suivant le mouvement **M2** pour entourer le deuxième point de fixation du socle **24F.** Ce mouvement **M2** est réalisé en insérant le feuillard **31** dans l'espace **25F** depuis la face inférieure du socle **24F** jusqu'à la face supérieure du socle **24F** jusqu'à ce que le feuillard **31** arrive le long de la canalisation **40.**

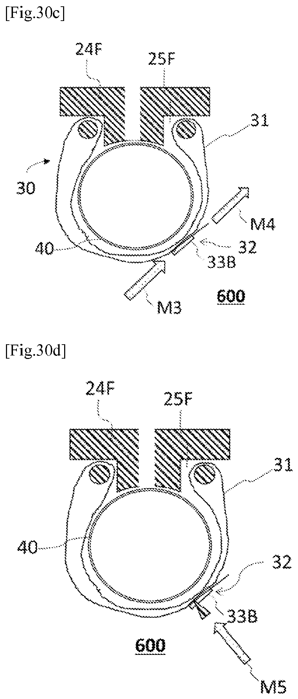

Le feuillard **31** est alors introduit dans la boucle **33B** suivant le mouvement **M3,** illustré sur la figure 30c. Le collier de serrage **30** est ensuite comprimé autour de la canalisation **40** en tirant sur l'extrémité du feuillard **33** après son passage dans le logement de la boucle **33B,** selon le mouvement **M4.**

Dans certains modes de réalisation, lorsque la tension recherchée de compression du feuillard **31** est obtenue, des moyens de fixation du feuillard **31** dans le logement peuvent être insérés dans la boucle **33C** au moyen d'une action selon une direction **M5,** perpendiculaire à la longueur du logement **35,** tel qu'illustré sur la figure 30d. Par la suite, l'extrémité restante du feuillard **31** dépassant de la boucle **33C** peut éventuellement être sectionnée.

En outre, la bande peut également présenter des encoches ou des rainures permettant d'accueillir ou de bloquer les moyens de réglage **32.**

Avantageusement, le collier de serrage **30** présente également des repères permettant d'adapter le serrage à la pression et au diamètre régnant dans la canalisation **40.**

Il existe plusieurs modes de réalisation permettant d'attacher le collier de serrage **30** au socle **24A-24K.**

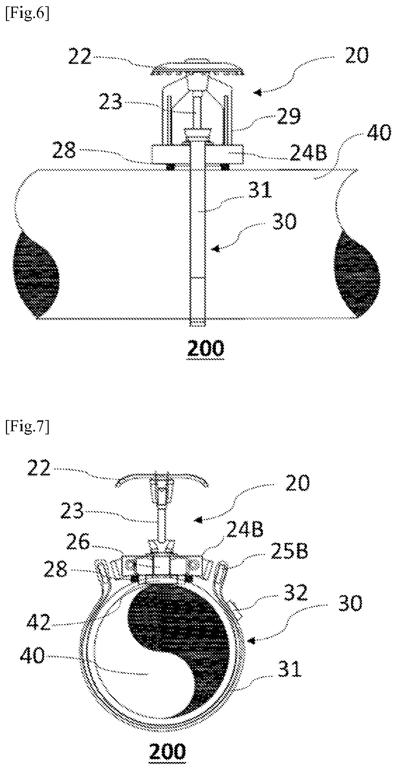

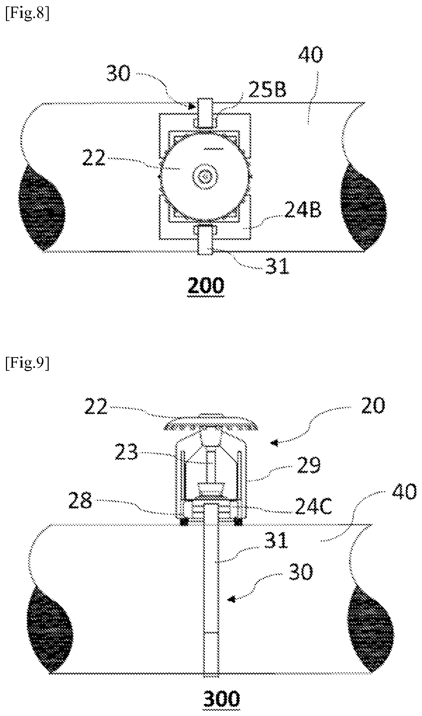

Tel qu'illustré sur les figures 3 à 5, dans un premier mode de réalisation, le socle **24A** présente une forme parallélépipédique avec des biseaux au niveau des coins. Le socle **24A** présente une longueur comprise entre 2 et 10 cm et une largeur comprise entre 2 et 5 cm. La longueur du socle **24A** est destinée à être positionnée dans une direction perpendiculaire à la direction principale **D** de la canalisation **40.** Le socle **24A** présente en ses extrémités deux rainures latérales **25A** ménagées dans l'épaisseur du socle **24A,** de forme sensiblement parallélépipédiques et destinées à permettre le passage de la bande **31** du collier de serrage **30.** Tel qu'illustré sur les figures 6 à 8, dans un deuxième mode de réalisation, le socle **24B** présente une forme parallélépipédique de longueur comprise entre 4 et 10 cm et de largeur comprise entre 4 et 10 cm. La longueur du socle est destinée à être orientée dans une direction perpendiculaire à la direction principale **D** de la canalisation **40.** Le socle **24B** présente une rainure centrale de forme parallélépipédique ainsi que deux renfoncements latéraux permettant d'accueillir et de fixer les étriers **29.** De plus, le socle **24B** comporte en ses extrémités deux rainures **25B,** ménagées dans l'épaisseur du socle **24B,** de forme sensiblement parallélépipédiques et destinées à permettre le passage de la bande **31** du collier de serrage **30.** Tel qu'illustré sur les figures 9 à 11, dans un troisième mode de réalisation, le socle **24C** présente une forme parallélépipédique de longueur comprise entre 2 et 10 cm et de largeur comprise entre 2 et 5 cm. La longueur du socle est destinée à être orientée dans une direction perpendiculaire à la direction principale **D** de la canalisation **40.** Le socle **24C** présente des points d'ancrage formés par deux renfoncements permettant de créer des ouvertures **25C.** L'extrémité des renfoncements comporte deux axes **43.** Ainsi, la bande **31** du collier de serrage 30 traverse les ouvertures **25C** et forme une boucle autour des axes **43.**

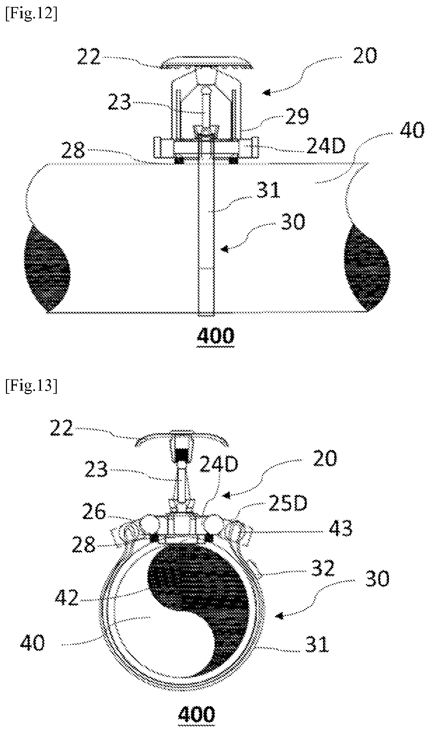

Tel qu'illustré sur les figures 12 à 14, dans un quatrième mode de réalisation, le socle **24D** présente une forme parallélépipédique de longueur comprise entre 2 et 8 cm et de largeur comprise entre 2 et 5 cm. La longueur du socle **24D** est destinée à être orientée dans une direction perpendiculaire à la direction principale **D** de la canalisation **40.**

Le socle **24D** présente en outre des moyens de fixation de deux axes **43** rapportés de part et d'autre du socle **24D.** Les axes **43** sont des points d'ancrage du collier de serrage **30,** positionnés de sorte à laisser un espace **25D** libre entre les bords du socle **24D** et les axes **43.** Cet espace **25D** est destiné à permettre le passage de la bande **31** du collier de serrage **30,** celle-ci pouvant alors former une boucle autour des axes **43.**

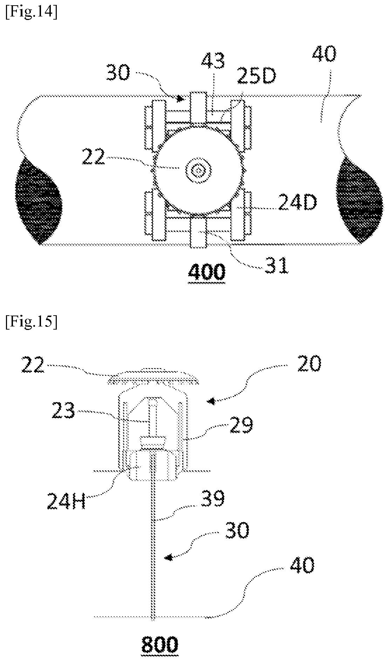

Tel qu'illustré sur les figures 15 à 17, dans un cinquième mode de réalisation, le socle **24H** comporte deux points d'ancrage **25H,** de part et d'autre du socle **24H.** Chaque point d'ancrage **25H** comprend un logement **49** présentant une profondeur comprise entre 0,3 et 1 cm et dimensionné par accueillir un axe **47** d'une longueur comprise entre 0.5 et 4 cm et d'un diamètre compris entre 0,1 et 1 cm. Dans ce cinquième mode de réalisation, le logement **49** s'étend sur toute la largeur du socle **24H.** Le logement **49** est bordé par deux ergots **48** de forme parallélépipédique. De préférence, la portion supérieure présente une forme biseautée ou arrondie pour permettre de guider le mouvement de l'axe **47** vers le logement **49** lors de l'installation des deux axes **47** dans les points d'ancrage **25H.** Les deux ergots **48** sont séparés d'une fente, dimensionnée pour permettre le passage du câble **39,** et pour retenir l'axe **47** lors du serrage du câble **39** autour de la canalisation **40.** Ainsi, lorsque le câble **39** est tendu autour de la canalisation **40,** l'axe **47** est fixé dans le logement **49,** retenu par les ergots **48.**

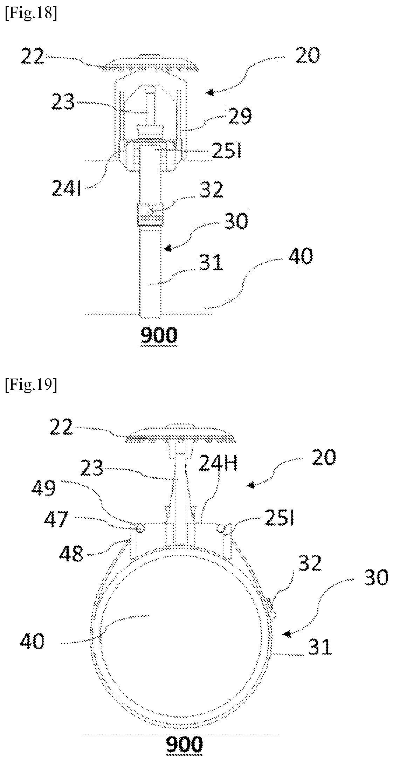

Tel qu'illustré sur les figures 18 à 20, dans le sixième mode de réalisation, le logement **49** des points d'ancrage **25I** peut présenter une profondeur plus faible sans pour autant entrainer l'extraction de l'axe **47.** La largeur de la fente peut en outre être adaptée à la largeur de l'élément longiligne **31.** Dans le sixième mode de réalisation, la fente est dimensionnée pour permettre le passage d'un feuillard **31.**

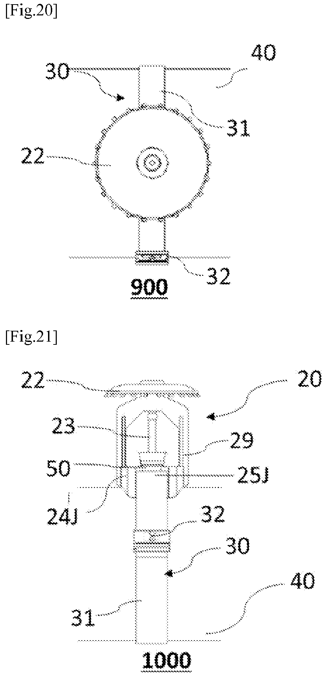

Tel qu'illustré sur les figures 21 à 23, dans un septième mode de réalisation, le socle **24J** présente des points d'ancrage **25J** comprenant un ergot **50** destiné à coopérer avec un trou ménagé aux extrémités de l'élément longiligne **31.** Afin de monter l'élément longiligne sur le socle **24J,** les trous de l'élément longiligne **31** sont insérés sur les ergots **50** de sorte à également entourer la canalisation **50,** puis le collier de serrage **30** est adapté au diamètre de la canalisation via les moyens de réglage **32.**

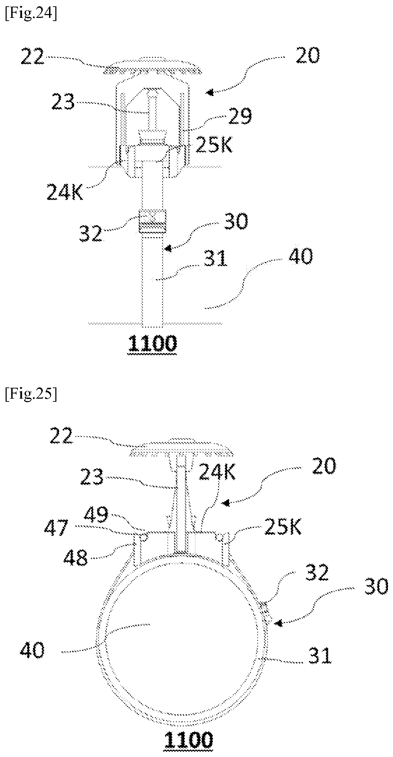

Tel qu'illustré sur les figures 24 à 26, dans un huitième mode de réalisation, le socle **24K** présente un logement **49** bordé par deux ergots **48** séparés d'une fente, dimensionnée pour permettre le passage de la largeur de l'élément longiligne **31.** La fente est recouverte d'une plaque reliant les deux ergots **48,** créant ainsi un espace d'une épaisseur comprise entre 0,05 et 0,2 cm, ne permettant pas le passage de l'axe **47,** mais seulement celui de l'élément longiligne **31.** Ainsi, afin d'insérer l'élément longiligne **31,** l'axe **49** doit d'abord être retiré, puis la portion terminale de l'élément longiligne **31** est insérée dans la fente recouverte de la plaque. L'axe **47** est ensuite fixé à l'extrémité de l'élément longiligne **31,** par exemple en le glissant dans une boucle créée à l'extrémité de l'élément longiligne **31.** Enfin, l'axe **47** est inséré dans le logement **49.** L'axe **47** ne peut ainsi pas s'extraire du logement **49** car il est bloqué par la présence de la plaque.

Tel qu'illustré sur la figure 27, dans un neuvième mode de réalisation de l'invention, le socle **24E** comporte des rainures **25E** ménagées dans l'épaisseur du socle **24E.** Un alésage **46** est également ménagé sur la portion inférieure des rainures **25E** permettant à la rainure de déboucher sur l'extérieur. Cet alésage **46** permet à la bande **31** de mieux s'adapter à la forme de la canalisation **40.**

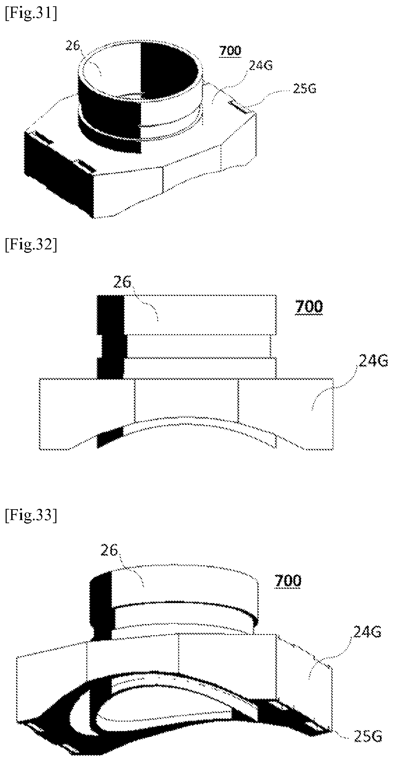

Tel qu'illustré sur les figures 31 à 33, dans un onzième mode de réalisation, le socle **24G** peut être rapporté sur la canalisation **40** avant que l'extincteur ne soit fixé sur le socle **24G.** Dans ce mode de réalisation, le socle **24G** présente une forme sensiblement hexagonale de longueur comprise entre 2 et 8 cm et de largeur comprise entre 2 et 5 cm. La longueur du socle **24G** est destinée à être orientée dans une direction perpendiculaire à la direction principale **D** de la canalisation **40.**

Le socle **24G** présente en outre deux paires de rainures latérales **25G** ménagées de part et d'autre du socle **24G** dans l'épaisseur du socle **24G,** de forme sensiblement parallélépipédiques et destinées à permettre le passage de deux colliers de serrage **30.** De préférence, les rainures sont espacées de 1 à 3 cm. Ce type de socle **24G** est particulièrement indiqué dans le cas où l'extincteur présente une tête **20** rainurée rapportée sur le socle **24G,** par exemple pour des canalisations **40** de grand diamètre, typiquement supérieur à DN 50.

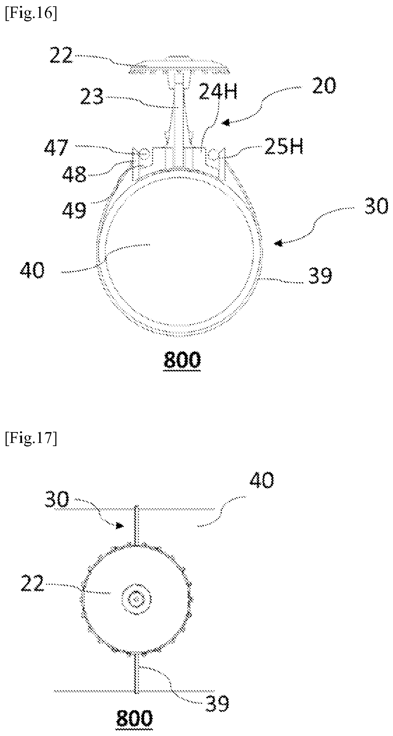

Le montage des colliers des deux serrage **30** s'effectue de la même manière que décrit aux figures 17a-17d, les colliers de serrage **30** pouvant être montés simultanément ou l'un après l'autre.

Pour conclure, l'invention permet de mettre au point un extincteur automatique à eau pouvant s'adapter à tous les diamètres de canalisations existants.

## Revendications

1. Extincteur automatique à eau (100, 200, 300, 400, 500, 600, 700, 800, 900, 1000, 1100) destiné à être monté sur une ouverture (42) d'une canalisation (40), ladite canalisation (40) faisant partie d'une installation configurée pour contenir de l'eau sous une pression comprise entre 5 et 20 bars, ledit extincteur (100, 200, 300, 400, 500, 600, 700, 800, 900, 1000, 1100) comportant :
- un socle (24A-24K) monobloc présentant un trou traversant (26),
- un joint (28) destiné à assurer l'étanchéité de la connexion entre l'ouverture (42) de ladite canalisation (40) et le trou traversant (26) dudit socle (24A-24K), et
- un élément d'obturation (23) du trou traversant (26) sensible à la température et configuré pour libérer ledit trou traversant (26), et
**caractérisé en ce que :**
- le socle (24A-24K) comporte en outre au moins deux points d'ancrage (25A-25K), et
- l'extincteur (100, 200, 300, 400, 500, 600, 700, 800, 900, 1000, 1100) comporte au moins un collier de serrage (30) comprenant :
• un feuillard (31) réalisé dans un matériau souple destiné à entourer partiellement la canalisation (40), ledit feuillard (31) coopérant avec le socle (24A-24K) au niveau desdits points d'ancrage (25A-25G), et
• des moyens de réglage (32), indépendants du socle (24A-24K) permettant d'adapter la longueur de l'au moins un collier de serrage (30) de sorte que l'extincteur (100, 200, 300, 400, 500, 600, 700, 800, 900, 1000, 1100) est apte à être monté sur des canalisations (40) de diamètres différents ; lesdits moyens de réglage (32) comprenant une boucle solidaire d'une extrémité du feuillard (31) et comportant un logement (35) dans lequel une autre extrémité du feuillard (31) est insérée, ladite autre extrémité du feuillard (31) étant déplacée par un mouvement (M4) comprimant le feuillard (31) autour de la canalisation de sorte à obtenir une tension recherchée de compression du feuillard (31), des moyens de fixation du feuillard (31) dans le logement (35) étant insérés dans la boucle au moyen d'une action selon une direction (M5) perpendiculaire à la longueur du logement (35) et au sens de déplacement du feuillard (31), de sorte à brider les déplacements du feuillard (31) et à maintenir ladite tension recherchée de compression du feuillard (31) autour de la canalisation (40), ledit extincteur (100, 200, 300, 400, 500, 600, 700, 800, 900, 1000, 1100) étant apte à supporter des pressions comprises entre 5 et 20 bars et, de préférence entre 8 et 12 bars .

2. Extincteur selon la revendication 1, **caractérisé en ce que** l'extincteur (100, 200, 300, 400, 500, 600, 700, 800, 900, 1000, 1100) comporte un unique collier de serrage (30) et uniquement deux points d'ancrage (25A-25K) disposés de part et d'autre du socle (24A-24K).

3. Extincteur selon la revendication 1 ou 2, **caractérisé en ce que** les points d'ancrage (25A-25G) sont des ouvertures traversantes orientées selon une direction parallèle à la direction principale (D) de la canalisation (40), le feuillard (31) étant monté sur le socle (24A-24G) en insérant au moins une extrémité du feuillard (31) dans les ouvertures traversantes et en formant une boucle autour des bordures dudit socle (24A-24G).

4. Extincteur selon la revendication 3, **caractérisé en ce que** les ouvertures traversantes sont des fentes ménagées dans le socle (24A-24G)

5. Extincteur selon la revendication 3, **caractérisé en ce que** les ouvertures traversantes correspondent à l'espace formé entre le socle (24A-24G) et un axe (47) du socle (24A-24G).

6. Extincteur selon l'une des revendications 1 à 5, **caractérisé en ce que** le feuillard (31) est formé dans un matériau métallique.

7. Extincteur selon l'une des revendications 1 à 6, **caractérisé en ce que** le collier de serrage (30) présente des repères visuels indiquant la position de serrage pour laquelle le joint (28) est comprimé de manière optimale en fonction du diamètre de la canalisation (40) et de la pression de service.

8. Extincteur selon l'une des revendications 1 à 7, **caractérisé en ce qu'**il comporte en outre un déflecteur (22) fixé au-dessus dudit socle (24A-24K) et destiné à pulvériser le flux d'eau issu de la canalisation (40).

9. Extincteur selon la revendication 8, **caractérisé en ce que** le socle (24A-24K) et la tête (20), comportant le déflecteur (22), les étriers (29) et/ou l'élément d'obturation (23) forment un bloc monolithique.

10. Extincteur selon la revendication 8, **caractérisé en ce que** le socle (24A-24G) et la tête (20), comportant le déflecteur (22), les étriers (29) et/ou l'élément d'obturation (23) sont indépendants, la tête (20) étant rapportée sur le socle (24A-24K) par vissage.

11. Extincteur selon l'une des revendications 1 à 10, **caractérisé en ce que** les moyens de fixation du feuillard (31) sont du type vis autoforeuse (34) et/ou bille dans un tube à section variable.

12. Installation de protection incendie incluant :
- au moins une canalisation (40) présentant au moins une ouverture (42), et
- au moins un extincteur (100, 200, 300, 400, 500, 600, 700, 800, 900, 1000, 1100) selon l'une des revendications 1 à 11.

13. Installation de protection incendie selon la revendication 12, **caractérisée en ce que** la canalisation (40) est une canalisation peinte ou pré-peinte sur ses faces interne et externe.

14. Installation selon la revendication 13, **caractérisée en ce que** la peinture de la canalisation (40) comprend un liant polymère époxyde.

## Patentansprüche

1. Automatisches wasserbetriebenes Feuerlöschorgan (100, 200, 300, 400, 500, 600, 700, 800, 900, 1000, 1100), das dafür bestimmt ist, an einer Öffnung (42) einer Leitung (40) angebracht zu werden, wobei die Leitung (40) Bestandteil einer Anlage ist, die dafür ausgelegt ist, Wasser unter einem Druck im Bereich von 5 bis 20 bar zu enthalten, wobei der Feuerlöscher (100, 200, 300, 400, 500, 600, 700, 800, 900, 1000, 1100) Folgendes aufweist:
- einen einstückigen Sockel (24A-24K), der aus Durchgangsloch (26) aufweist,
- eine Dichtung (28), die dafür bestimmt ist, die Verbindung zwischen der Öffnung (42) der Leitung (40) und dem Durchgangsloch (26) des Sockels (24A-24K) abzudichten, und
- ein Element (23) zum Schließen des Durchgangslochs (26), das temperaturempfindlich ist und dafür ausgelegt ist, das Durchgangsloch (26) freizugeben, und
**dadurch gekennzeichnet ist, dass:**
- der Sockel (24A-24K) darüber hinaus mindestens zwei Verankerungspunkte (25A-25K) aufweist, und
- das Feuerlöschorgan (100, 200, 300, 400, 500, 600, 700, 800, 900, 1000, 1100) mindestens eine Rohrschelle (30) aufweist, die Folgendes umfasst:
• ein Band (31), das aus einem nachgiebigen Material hergestellt ist und dazu bestimmt ist, die Leitung (40) teilweise zu umgeben, wobei das Band (31) mit dem Sockel (24A-24K) auf Höhe der Verankerungspunkte (25A-25G) zusammenwirkt, und
• Einstellmittel (32), die vom Sockel (24A-24K) unabhängig sind, wobei sie es ermöglichen, die Länge der mindestens einen Rohrschelle (30) derart anzupassen, dass das Feuerlöschorgan (100, 200, 300, 400, 500, 600, 700, 800, 900, 1000, 1100) dazu befähigt ist, an Leitungen (40) mit verschiedenen Durchmessern angebracht zu werden; wobei die Einstellmittel (32) eine Schlaufe umfassen, die fest mit einem Ende des Bandes (31) verbunden ist, und eine Aussparung (25) aufweisen, in welche ein anderen Ende des Bandes (31) eingefügt wird, wobei das andere Ende des Bandes (31) durch eine Bewegung (M4) verschoben wird, welche das Band rundum die Leitung (40) derart zusammendrückt, dass eine angestrebte Druckspannung des Bandes (31) erzielt wird, wobei Mittel zum Befestigen des Bandes (31) in der Aussparung (35) mit Hilfe einer Einwirkung gemäß einer Richtung (M5) in die Schlaufe eingefügt werden, die rechtwinklig zur Längserstreckung der Aussparung (35) und zur Verschiebungsrichtung des Bandes (31) ist, um die Verschiebungen des Bandes (31) zu beschränken und die angestrebte Druckspannung des Bandes (31) rundem die Leitung (40) aufrecht zu erhalten, wobei das Feuerlöschorgan (100, 200, 300, 400, 500, 600, 700, 800, 900, 1000, 1100) dazu befähigt ist, Drücke im Bereich von 5 bis 20 bar, vorzugsweise 8 bis 12 bar, zu ertragen.

2. Feuerlöschorgan nach Anspruch 1, **dadurch gekennzeichnet, dass** das Feuerlöschorgan (100, 200, 300, 400, 500, 600, 700, 800, 900, 1000, 1100) eine einzige Rohrschelle (30) und lediglich zwei Verankerungspunkte (25A-25K) umfasst, welche beiderseits des Sockels (24A-24K) angeordnet sind.

3. Feuerlöschorgan nach Anspruch 1 oder 2, **dadurch gekennzeichnet, dass** es sich bei den Verankerungspunkten (25A-25G) um Durchgangsöffnungen gemäß einer Richtung handelt, die parallel zur Hauptrichtung (D) der Leitung (40) ist, wobei das Band (31) am Sockel (24A-24G) angebracht wird, indem mindestens ein Ende des Bandes (31) in die Durchgangsöffnungen eingefügt wird und indem eine Schlaufe rundum die Ränder des Sockels (24A-24G) gebildet wird.

4. Feuerlöschorgan nach Anspruch 3, **dadurch gekennzeichnet, dass** es sich bei den Durchgangsöffnungen um Schlitze handelt, die im Sockel (24A-24G) ausgespart sind.

5. Feuerlöschorgan nach Anspruch 3, **dadurch gekennzeichnet, dass** die Durchgangsöffnungen dem Raum entsprechen, welcher zwischen dem Sockel (24A-24G) und einer Achse (47) des Sockels (24A-24G) gebildet ist.

6. Feuerlöschorgan nach einem der Ansprüche 1 bis 5, **dadurch gekennzeichnet, dass** das Band (31) aus einem metallischen Material gebildet ist.

7. Feuerlöschorgan nach einem der Ansprüche 1 bis 6, **dadurch gekennzeichnet, dass** die Rohrschelle (30) Sichtmarkierungen aufweist, welche die Festziehposition anzeigen, für welche die Dichtung (28) in Abhängigkeit vom Durchmesser der Leitung (40) und vom Betriebsdruck auf optimale Weise zusammengedrückt ist.

8. Feuerlöschorgan nach einem der Ansprüche 1 bis 7, **dadurch gekennzeichnet, dass** es darüber hinaus eine Umlenkvorrichtung (22) aufweist, die oberhalb des Sockels (24A-24K) befestigt ist und dafür bestimmt ist, den Wasserstrom zu zerstäuben, welcher aus der Leitung (40) stammt.

9. Feuerlöschorgan nach Anspruch 8, **dadurch gekennzeichnet, dass** der Sockel (24A-24K) und der Kopf (20), welcher die Umlenkvorrichtung (22) aufweist, die Abstandshalter (29) und/oder das Schließelement (23) ein stückig ausgebildet sind.

10. Feuerlöschorgan nach Anspruche 8, **dadurch gekennzeichnet, dass** der Sockel (24A-24G) und der Kopf (20), welcher die Umlenkvorrichtung (23) aufweist, die Abstandshalter (29) und/oder das Schließelement (23) unabhängig sind, wobei der Kopf (20) durch Verschrauben an den Sockel (24A-24K) angefügt ist.

11. Feuerlöschorgan nach einem der Ansprüche 1 bis 10, **dadurch gekennzeichnet, dass** die Mittel zur Befestigung des Bandes (31) vom Typ selbstbohrende Schraube (34) und/oder Kugel in einem Rohr mit variablem Durchmesser sind.

12. Brandschutzanlage, die Folgendes beinhaltet:
- mindestens eine Leitung (40), die mindestens eine Öffnung (42) aufweist, und
- mindestens ein Feuerlöschorgan (100, 200, 300, 400, 500, 600, 700, 800, 900, 1000, 1100) nach einem der Ansprüche 1 bis 11.

13. Brandschutzanlage nach Anspruch 12, **dadurch gekennzeichnet, dass** es sich bei der Leitung (40) um eine Leitung handelt, deren Innen- und Außenseite mit einem Anstrich oder einer Grundierung versehen ist.

14. Anlage nach Anspruch 13, **dadurch gekennzeichnet, dass** der Anstrich der Leitung (40) ein Epoxidpolymer-Bindemittel umfasst.

## Claims

1. Automatic water extinguisher (100, 200, 300, 400, 500, 600, 700, 800, 900, 1000, 1100) intended to be mounted on an opening (42) of a pipeline (40), said pipeline (40) forming part of an installation configured to contain water under a pressure of between 5 and 20 bars, said extinguisher (100, 200, 300, 400, 500, 600, 700, 800, 900, 1000, 1100) comprising:
- a one-piece base (24A-24K) having a through-hole (26),
- a seal (28) intended to seal the connection between the opening (42) of said pipeline (40) and the through-hole (26) of said base (24A-24K), and
- a blocking element (23) for the through-hole (26) sensitive to temperature and configured to release said through-hole (26),
**characterised in that:**
- the base (24A-24K) further comprises at least two anchoring points (25A-25K), and
- the extinguisher (100, 200, 300, 400, 500, 600, 700, 800, 900, 1000, 1100) comprises at least one clamping collar (30) comprising:
• a strip (31) made of a flexible material intended to partially surround the pipeline (40), said strip (31) cooperating with the base (24A-24K) at said anchoring points (25A-25G), and
• adjustment means (32), independent of the base (24A-24K), making it possible to adapt the length of the at least one clamping collar (30) so that the extinguisher (100, 200, 300, 400, 500, 600, 700, 800, 900, 1000, 1100) is able to be mounted on pipelines (40) of different diameters ; said adjustment means (32) comprising a loop integral with one end of the strip (31) and comprising a housing (35) in which another end of the strip (31) is inserted, said other end of the strip (31) being displaced by a movement (M4) compressing the strip (31) around the pipeline so as to obtain a desired compression tension of the strip (31), fastening means for the strip (31) in the housing (35) being inserted in the loop by means of an action in a direction (M5) perpendicular to the length of the housing (35) and to the direction of displacement of the strip (31), so as to restrain the displacements of the strip (31) and to maintain said desired compression tension of the strip (31) around the pipeline (40), said extinguisher (100, 200, 300, 400, 500, 600, 700, 800, 900, 1000, 1100) being able to withstand pressures of between 5 and 20 bars and, preferably between 8 and 12 bars.

2. Extinguisher according to claim 1, **characterised in that** the extinguisher (100, 200, 300, 400, 500, 600, 700, 800, 900, 1000, 1100) comprises one single clamping collar (30) and only two anchoring points (25A-25K) disposed either side of the base (24A-24K).

3. Extinguisher according to claim 1 or 2, **characterised in that** the anchoring points (25A-25G) are through openings oriented in a direction parallel to the main direction (D) of the pipeline (40), the strip (31) being mounted on the base (24A-24G) by inserting at least one end of the strip (31) in the through openings and by forming a loop around the borders of said base (24A-24G).

4. Extinguisher according to claim 3, **characterised in that** the through openings are slots made in the base (24A-24G).

5. Extinguisher according to claim 3, **characterised in that** the through openings correspond to the space formed between the base (24A-24G) and an axis (47) of the base (24A-24G).

6. Extinguisher according to one of claims 1 to 5, **characterised in that** the strip (31) is formed in a metal material.

7. Extinguisher according to one of claims 1 to 6, **characterised in that** the clamping collar (30) has visual markers indicating the clamping position for which the seal (28) is optimally compressed as a function of the diameter of the pipeline (40) and the service pressure.

8. Extinguisher according to one of claims 1 to 7, **characterised in that** it further comprises a deflector (22) fixed above said base (24A-24K) and intended to spray the water flow coming from the pipeline (40).

9. Extinguisher according to claim 8, **characterised in that** the base (24A-24K) and the head (20), comprising the deflector (22), the stirrups (29) and/or the blocking element (23) form a monolithic block.

10. Extinguisher according to claim 8, **characterised in that** the base (24A-24G) and the head (20), comprising the deflector (22), the stirrups (29) and/or the blocking element (23) are independent, the head (20) being mounted on the base (24A-24K) by screwing.

11. Extinguisher according to one of claims 1 to 10, **characterised in that** the fastening means for the strip (31) are of the self-drilling screw (34) and/or ball in a variable-section tube type.

12. Fire protection installation including:
- at least one pipeline (40) having at least one opening (42), and
- at least one extinguisher (100, 200, 300, 400, 500, 600, 700, 800, 900, 1000, 1100) according to one of claims 1 to 11.

13. Fire protection installation according to claim 12, **characterised in that** the pipeline (40) is a pipeline painted or pre-painted on its internal and external faces.

14. Installation according to claim 13, **characterised in that** the painting of the pipeline (40) comprises an epoxide polymer binder.
